Europäisches Patentamt

European Patent Office

Office européen des brevets

(19)

(11) Publication number: **0 278 426**

**A2**

(12) **EUROPEAN PATENT APPLICATION**

(21) Application number: **88101698.4**

(22) Date of filing: **05.02.88**

(51) Int. Cl.⁴ **G06F 12/08**

(30) Priority: **07.02.87 JP 25574/87**
**07.02.87 JP 25576/87**

(43) Date of publication of application:
**17.08.88 Bulletin 88/33**

(84) Designated Contracting States:
**DE FR GB IT NL**

(71) Applicant: **NEC CORPORATION**
**33-1, Shiba 5-chome, Minato-ku**
**Tokyo 108(JP)**

(72) Inventor: **Kinoshita, Kouji c/o NEC**
**Corporation**
**33-1, Shiba 5-chome**
**Minato-ku Tokyo(JP)**

(74) Representative: **Vossius & Partner**
**Siebertstrasse 4 P.O. Box 86 07 67**
**D-8000 München 86(DE)**

(54) Buffer memory circuit arrangement capable of receiving a request without qualification during block transfer.

(57) In a buffer memory circuit arrangement which receives a previous request given from a request source together with a previous address and which is loaded with a block of data units by block transfer from a main memory in the absence of the block, an avail control circuit (21) and a request control circuit (22) receive a following request along with a following address even in the course of the block transfer, regardless of the following address. The following request can be processed within time intervals between write intervals which are defined during the block transfer to write the data units into a buffer memory (16, 17). After the following request is processed, an additional request can also be received before completion of the block transfer by monitoring, in a restart controller (41), the previous and the following addresses and the number of memory reply signals sent from the main memory during the block transfer.

FIG. 2

EP 0 278 426 A2

# BUFFER MEMORY CIRCUIT ARRANGEMENT CAPABLE OF RECEIVING A REQUEST WITHOUT QUALIFICATION DURING BLOCK TRANSFER

This invention relates to a buffer memory circuit arrangement which is used intermediate between a request source, such as a central processing unit, and a main memory and which is capable of carrying out block transfer.

A buffer memory circuit arrangement of the type described comprises a buffer memory, such as a cache memory, for memorizing a plurality of blocks each of which is composed of a plurality of data units. Such a buffer memory is accessed by requests which are issued from a request source, such as a central processing unit, to the buffer memory circuit arrangement and which may be write-in requests and/or read requests. Block transfer is carried out between a main memory and the buffer memory in response to one of the requests when the block in question is absent in the buffer memory. In this event, the data units of the block under consideration are transferred as reply data units from the main memory to the buffer memory. As a result, a plurality of write-in intervals are necessary on writing the block in question into the buffer memory. This shows that a following request must be put into a waiting state during the block transfer without being processed in the buffer memory circuit arrangement. Thus, the waiting state lasts for a waiting interval of time between a beginning of the block transfer and an end thereof.

Such a waiting interval of time brings about a serious problem because any processing can be carried out during the waiting interval of time.

In order to solve the above-mentioned problem, proposal has been made in Japanese Patent Publication No. Syô 53-24,260, namely, 24,260/1978, about a method of carrying out block transfer from a main memory to a buffer memory through a data buffer. With this method, a plurality of data units are moved from a main memory to the data memory in response to a previous read request when the block transfer is necessary about the previous read request. Such data units may be called block transfer data units. After a leading one of the reply data units is transferred to the data buffer and the request source, a following read request is processed in preference to a write-in operation of the remaining reply data units into the buffer memory. The remaining reply data units are written into the buffer memory within each idle interval which appears on processing the following read request in the buffer memory.

According to this method, the following read request can be processed even during the block transfer after the leading reply data unit is stored from the data memory into the buffer memory.

Therefore, it is possible to quickly process the following read request without a long wait until completion of the block transfer. However, this method is disadvantageous in that a large amount of hardware is required to provide the data memory.

Alternatively, another method is known wherein a succeeding read request is processed in a buffer memory circuit arrangement within an idle interval which is forcibly defined in a write-in operation carried out during the block transfer. Thus, the write-in operation is divided into a plurality of write-in intervals with the idle interval interposed between two adjacent ones of the write-in intervals. A large amount of hardware is not required in this method. However, the write-in operation becomes long because the idle interval is defined within the write-in operation. This gives rise to slight degradation of performance in comparison with the aforementioned method.

Moreover, each write-in interval in the buffer memory circuit arrangement must be recognized or monitored by the request source. In addition, the request source should predict each write-in interval prior to issuing a request to the buffer memory circuit arrangement. Consequently, an intricate control operation must be carried out in the request source.

Furthermore, an additional method has been disclosed in Unexamined Japanese Patent Publication No. Syô 62-72,041, namely, 72,041/1987, so as to effectively utilize an idle interval which might appear in a write-in operation during block transfer. More specifically, let block transfer last between a main memory and a cache memory in response to a previous read request accompanied by a previous word address a part of which serves to indicate a previous block address. A sequence of reply data units is successively sent from the main memory during the block transfer. Under the circumstances, it is assumed that a following read request is issued from a request source with a following word address which is accompanied by the following read request and a part of which serves to specify a following block address.

On the other hand, the reply data units are successively counted by a counter circuit to provide a reply count. When the following block address is coincident with the previous block address, it is detected whether or not a reply data unit is stored in an address specified by the following word address. Such detection is possible by monitoring the reply count of the counter circuit. As soon as the detection is made about storing the reply data unit in the cache memory, the reply data unit is sent from the cache memory to the request source.

Thus, the following read request can quickly be processed before completion of the block transfer on coincidence between the previous and the following block addresses.

However, the following read request must be put into a waiting state until completion of the block transfer when the following block address is different from the previous block address.

At any rate, restriction is imposed on the following block address which can be received by the cache memory. In other words, the following read request is not received without any qualification. Moreover, no consideration is directed to an additional request which might be received after the following request during the block transfer.

## Summary of the Invention:

It is an object of this invention to provide a buffer memory circuit arrangement which can successively receive, after a previous request, a following request even during block transfer which is being carried out in connection with the previous request.

It is another object of this invention to provide a buffer memory circuit arrangement of the type described, wherein the following request can be received without qualification even when a block address of the previous request is different from that of the following request.

It is a further object of this invention to provide a buffer memory circuit arrangement of the type described, which is capable of receiving an additional request after the following request during the block transfer carried out in relation to the previous request.

It is still another object of this invention to provide a buffer memory circuit arrangement of the type described, wherein the additional request is received immediately after the following request is processed.

A buffer memory circuit arrangement to which this invention is applicable is for use in combination with a request source and a main memory to receive a succession of requests from the request source and to fetch a block from the main memory in response to each of the requests, one request at a time, by carrying out block transfer when the block is absent in the buffer memory circuit arrangement for the one request. The block is composed of a sequence of data units to which consecutive unit addresses are assigned, respectively. The buffer memory circuit arrangement comprises a buffer memory for storing the data units of the block within write intervals defined during the block transfer, respectively. The one request is followed by a following request of the succession of request and is accompanied by a following address of the unit addresses, respectively. According to this invention, the buffer memory circuit arrangement comprises receiving means coupled to the request source for receiving the following request regardless of the following address during the block transfer and processing means coupled to the receiving means for processing the following request received by the receiving means unless the buffer memory is during the write intervals. The processing means is otherwise for processing the following request after delay of the following request.

## Brief Description of the Drawing:

Fig. 1 is a block diagram of an information processing system which comprises a buffer memory circuit arrangement according to a preferred embodiment of this invention;

Fig. 2 is a detailed block diagram of the buffer memory circuit arrangement illustrated in Fig. 1;

Fig. 3 is a circuit diagram of an avail control circuit for use in the buffer memory circuit arrangement shown in Fig. 2;

Fig. 4 is a circuit diagram of a request control circuit for use in the buffer memory circuit arrangement shown in Fig. 2;

Fig. 5 is a circuit diagram of a block transfer controller for use in the buffer memory circuit arrangement illustrated in Fig. 2;

Fig. 6 is a circuit diagram of a hit detector for use in the buffer memory circuit arrangement illustrated in Fig. 2;

Fig. 7 is a circuit diagram of a restart controller for use in the buffer memory circuit arrangement illustrated in Fig. 2; and

Fig. 8 is a time chart for use in describing operation of the buffer memory circuit arrangement illustrated in Fig. 2.

## Description of the Preferred Embodiment:

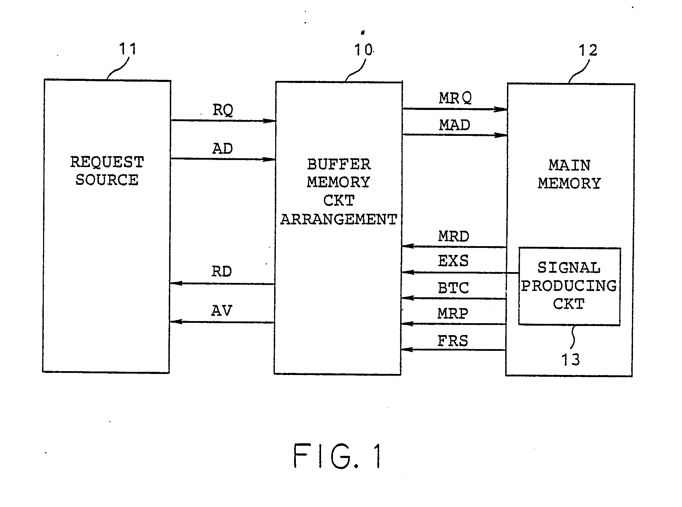

Referring to Fig. 1, an information processing system comprises a buffer memory circuit arrangement 10 to which this invention is applicable and which is placed intermediate between a request source 11, such as a central processing unit, and a main memory 12 having a lot of word addresses partitioned into a plurality of blocks. The buffer memory circuit arrangement 10 is supplied from the request source 11 with a succession of requests each of which is given as a request signal RQ. The request signal RQ is accompanied by an address signal AD. The request signal RQ is representative of either a read request or a write-in request for the main memory 12. The address signal AD specifies a word address, a part of which serves as a block address for specifying a selected block of the main memory 12.

The buffer memory circuit arrangement 10 sends a buffer reply data signal RD and an avail signal AV to the request source 11. The buffer reply data signal RD is a reply to the request RQ while the avail signal AV is representative of availability of the buffer memory circuit arrangement 10. In other words, the avail signal AV is indicative of whether or not the buffer memory circuit arrangement 10 is available for the request source 11.

A memory request signal MRQ and a memory address signal MAD are produced by the buffer memory circuit arrangement 10 in relation to the request signal RQ and the buffer address signal AD, respectively, and are delivered from the buffer memory circuit arrangement 10 to the main memory 12. Responsive to the memory request signal MRQ and the memory address signal MAD, the main memory 12 supplies the buffer memory circuit arrangement 10 with a sequence of memory reply data unit signals MRD and a sequence of memory reply signals MRP representative of memory replies, respectively. The memory reply data unit signals MRD are successively sent from the main memory 12 to the buffer memory circuit arrangement 10 by carrying out block transfer. The block transfer is carried out from a leading or zeroth one of the memory reply data unit signals MRD to a final or last one thereof when the block in question is absent from the buffer memory circuit arrangement 10.

In addition, the main memory 12 delivers a first reply signal FRS and a block transfer completion signal BTC to the buffer memory circuit arrangement 10. The first reply signal FRS is produced in synchronism with the zeroth reply data unit signal FRS and is representative of production of the zeroth reply data unit signal while the block transfer completion signal BTC stands for completion of the block transfer.

In the example being illustrated, an execution suppress signal EXS is also sent from a signal producing circuit 13 of the main memory 12 to the buffer memory circuit arrangement 10 during the block transfer to periodically suppress reception of any request signals RQ sent from the request source 11 to the buffer memory circuit arrangement 10. When the memory reply signals MRP are divided into even and odd numbered memory reply signals, the execution suppress signal EXS may be produced in synchronism with the odd numbered memory reply signals. Such an execution suppress signal can be produced by the use of a usual circuit technique. This means that any request signals RQ are not temporarily received by the buffer memory circuit arrangement 10 in the presence of the execution suppress signal EXS and that any processing can be carried out in the buffer memory circuit arrangement 10 in the presence of the execution suppress signal EXS.

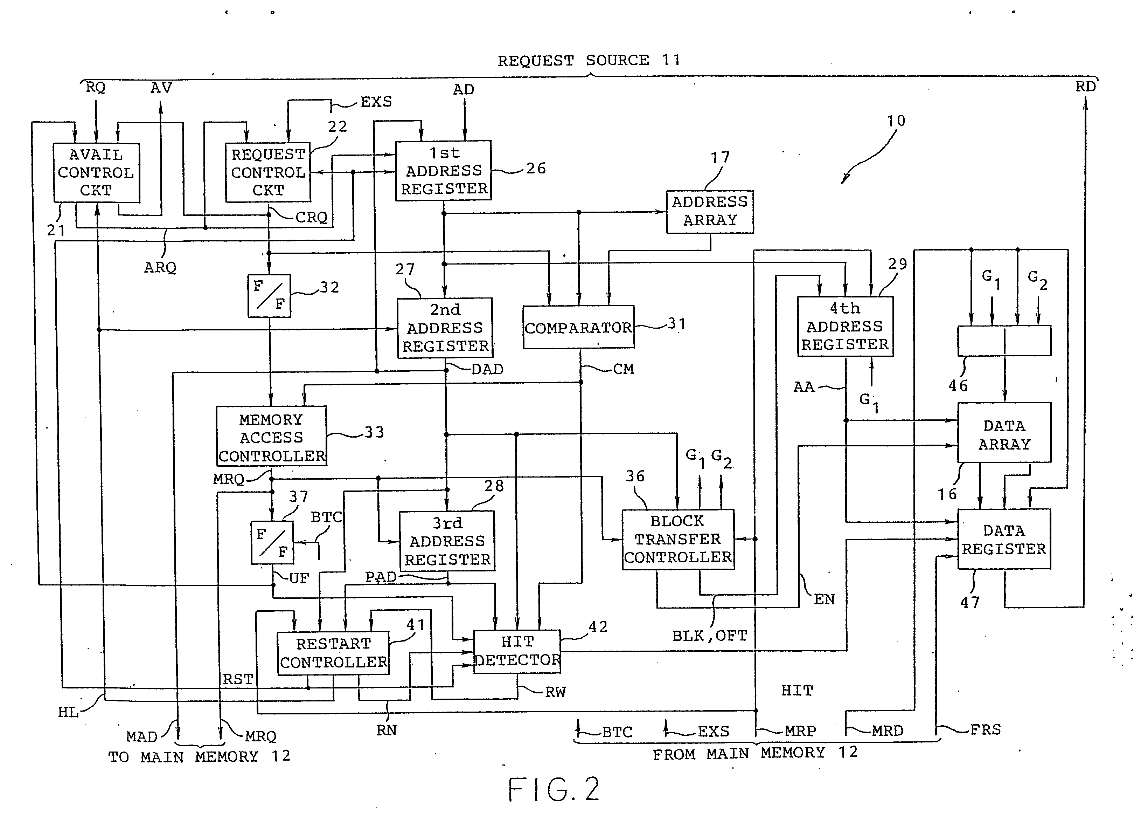

Referring to Fig. 2 together with Fig. 1, a buffer memory circuit arrangement 10 according to a preferred embodiment of this invention carries out processing or operation by the use of similar signals designated by like reference symbols in Fig. 1. The illustrated buffer memory circuit arrangement 10 comprises a buffer memory which may be called a translation lookaside buffer (TLB) and which is divided into a data array 16 for partly storing, as data unit signals, the data units memorized in the main memory 12 and an address array 17 for storing, in array addresses, data address signals of the data units stored in the data array 16. Each of the data address signals is composed of a virtual address part and a real address part. The address array 17 is loaded with a validity bit representative of either validity or invalidity of each stored data address signal.

The request signal RQ is delivered from the request source 11 through an avail control circuit 21 to a request control circuit 22 which is supplied with the execution suppress signal EXS from the main memory 12. On the other hand, the buffer address signal AD is given to a first address register 26 which is connected to second and third address registers 27 and 28 in series. As a result, the address signal AD is kept in the first address register 26 to be sent to the second address register 27 and a fourth address register 29 on one hand and to be partially sent to the address array 17 on the other hand. Herein, it is assumed that the buffer address signal AD is composed of, for example, twenty-six bits and is divisible into a virtual address portion of, for example, fifteen bits and a real address portion of, for example, eleven bits. The real address portion is further divisible into a higher significant fraction of eight bits and a lower significant fraction of three bits. The higher significant fraction may be referred to as a block address for specifying each block stored in the data array 17 while the lower significant fraction may be referred to as an offset address for specifying each data unit within the blocks.

In the known manner, the address array 17 is accessed by a part of the real address portion of the buffer address signal AD to read a selected one of the data address signals out of the address array 17 together with the validity bit. The virtual address portion of the selected data address signal is delivered to a comparator 31 together with the validity bit.

Inasmuch as the virtual address part of the buffer address signal AD is given from the first address register 26 to the comparator 31, comparison is made in the comparator 31 between the virtual address portion of the selected data address signal and the virtual address part of the address signal AD under control of the request control circuit 22, provided that the validity bit is representative of the validity of the selected data address signal. In order to control the comparator 31, the request control circuit 22 supplies the comparator 31 with a controlled result signal CRQ which stands for a result of controlling the request signal RQ in a manner to be described later. Anyway, the comparator 31 produces a comparison result signal CM which is indicative of a result of comparison and which takes a logic "1" level when coincidence is detected between the above-mentioned portion and the virtual address part.

The controlled request signal CRQ is representative of the fact that the address array 17 is accessed when it takes the logic "1" level. The controlled request signal CRQ of the logic "1" level is sent through a flip-flop 32 to a memory access controller 33 which is supplied with the comparison result signal CM from the comparator 31.

Responsive to the controlled request signal CRQ and the comparison result signal CM, the memory access controller 33 delivers the memory request signal MRQ to the main memory 12 when the comparison result signal CM takes a logic "0" level representative of incoincidence between the virtual address portion and the virtual address part. The memory request signal MRQ is also delivered to the third address register 28 and a block transfer controller 36 which is connected to both the second address register 27 and the main memory 12. In addition, the memory request signal MRQ is sent to a flag flip-flop 37 supplied with the block transfer completion signal BTC from the main memory 12. The flag flip-flop 37 serves to keep a flag of the logic "1" level during block transfer, as will later be described. The flag may therefore be called an "under transfer" flag signal and is depicted at UF.

In Fig. 2, the buffer address signal AD is sent to the second address register 27 and produced as a delayed address signal DAD after it is kept in the first address register 26.

The delayed address signal DAD is selectively delivered to the main memory 12 as the memory address signal MAD and to the third address register 28, the block transfer controller 36, a restart controller 41, and a hit detector 42 under control of the restart controller 41, as will become clear later.

It suffices to say that the restart controller 41 is operable to indicate a restart of operation while the hit detector 42 is operable to detect whether or not a data unit is stored in the data array 16 in cooperation with the restart controller 41 and to produce a hit or processing timing signal HIT when the data unit in question is present in the data array 16.

The memory reply data unit signals MRD are given from the main memory 12 to a first data register 46 divided into an upper part and a lower part. Each of the upper and the lower parts has a byte capacity of eight bytes. Accordingly, the first data register 46 has entirely the byte capacity of sixteen bytes. Thereafter, the memory reply data unit signals MRD are written into the data array 16. A sequence of readout data units is read out of the data array 16 and sent through a second data register 47 to the request source 11 as the buffer reply data signal RD. During the block transfer, a leading one of the readout data units is sent to both the first and the second data registers 46 and 47 in parallel. Each readout data unit has a data length of eight bytes.

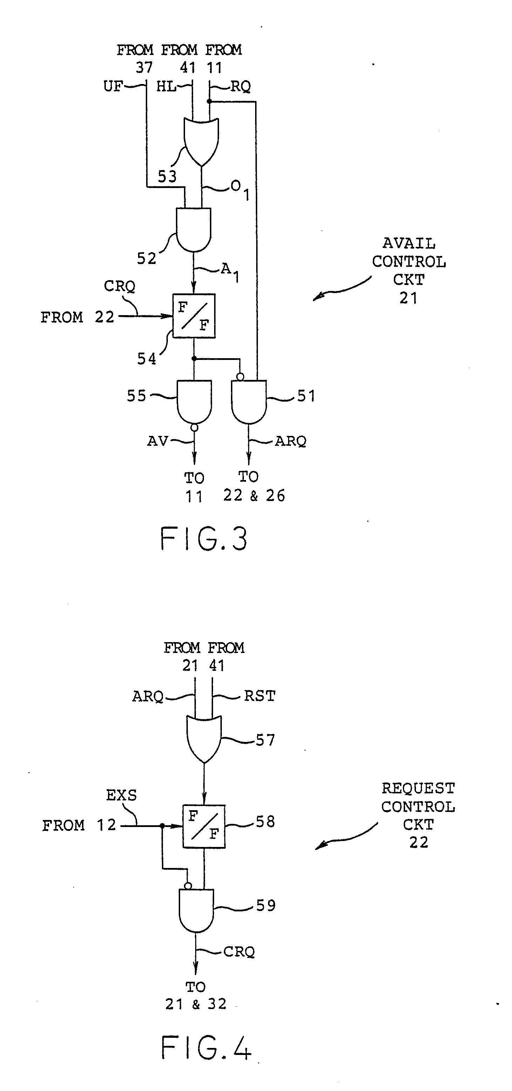

Referring to Fig. 3 in addition to Fig. 2, the avail control circuit 21 is supplied with the request signal RQ from the request source 11. During the block transfer, the "under transfer" flag signal UF of the logic "1" level is given from the flag flip-flop 37. In addition, a hold signal HL is sent from the restart controller 41, as will later be described, while the controlled request signal CRQ is given from the request control circuit 22. It may be understood that the hold signal HL is produced during the block transfer carried out in relation to a previous one of the requests, when a following one of the requests is pending within the buffer memory circuit arrangement 10. The previous request appears as a previous request signal accompanied by a previous address signal for specifying a previous address divisible into a previous block address and a previous offset address. Likewise, the following request appears as a following address signal accompanied by a following address signal for specifying a following address divisible into a following block address and a following offset address.

The request signal RQ is delivered direct to an AND gate 51 on one hand and to an AND gate 52 through an OR gate 53 which is also given the hold signal HL and which produces an OR gate output signal $O_1$. Responsive to the OR gate output signal $O_1$ and the "under transfer" flag signal UF, the AND gate 52 supplies an AND gate output signal $A_1$ to a request rejection flip-flop 54 which is reset in response to the controlled request signal CRQ of the logic "1" level. This shows that the request rejection flip-flop 54 serves to reject reception of a request given from the request source 11 when the request rejection flip-flop 54 is put into a set state.

A flip-flop output signal is supplied direct to an inverter 55 and to the AND gate 51 after it is inverted. When the request rejection flip-flop 54 is put into the set state, the avail signal AV of the logic "0" level is sent from the inverter 55 to the request source 11 to indicate rejection of reception. On the other hand, the avail signal AV of the logic "1" level is sent to the request source 11 to indicate acceptance of reception during a reset state of the request rejection flip-flop 54.

Under the circumstances, the request signal RQ is sent through the AND gate 51 as an accepted request signal ARQ to the request control circuit 22 and the first address register 26 when the request rejection flip-flop 54 is put into the reset state.

It is to be noted that the request rejection flip-flop 54 is set during reception of the "under transfer" flag signal UF, if either the hold signal HL or the request signal RQ is received, and that the request rejection flip-flop 54 is reset in response to the controlled request signal CRQ. In other words, the request rejection flip-flop 54 is kept in the reset state when the block transfer is carried out in relation to the previous request. The request rejection flip-flop 54 is reset after reception of the following request. This means that the following request is received without qualification regardless of a following address accompanying the following request. An additional request can be also received after the following request when the request rejection flip-flop 54 is put into the reset state.

Referring to Fig. 4 afresh and Fig. 2 again, the request control circuit 22 is supplied with the accepted request signal ARQ, a restart timing signal RST, and the execution suppress signal EXS to deliver the controlled request signal CRQ to the first address register 26 and the flip-flop 32. The restart timing signal RST defines a timing of restarting reception of requests and is produced by the restart controller 41 in a manner to be described later.

In Fig. 4, the accepted request signal ARQ and the restart timing signal RST are sent through an OR gate 57 to a reception flip-flop 58 which is given the execution suppress signal EXS from the main memory 12. The reception flip-flop 58 is put into a set state in response to either the accepted request signal ARQ or the restart timing signal RST and is also put into a hold state in response to the execution suppress signal EXS. During the hold state, the state of the reception flip-flop 58 is kept intact.

A flip-flop output signal is sent from the reception flip-flop 58 to an AND gate 59 responsive to an inverted execution suppress signal. With this structure, the controlled request signal CRQ of the logic "1" level is delivered through the AND gate 59 in the absence of the execution suppress signal EXS when the reception flip-flop 58 is put into the set state. At any rate, the set state of the reception flip-flop 58 represents that the first address register 26 is loaded with an address signal AD.

In Fig. 2, the controlled request signal CRQ is delivered to the memory access controller 33 through the flip-flop 32 and to the comparator 31. The comparator 31 is operable in the above-mentioned manner to produce the comparison result signal CM. The memory access controller 33 produces the memory request signal MRQ in response to the comparison result signal CM and the controller request signal CRQ sent through the flip-flop 32. The memory request signal MRQ is delivered to the block transfer controller 36 along with the delayed address signal DAD and the memory reply signal MRP which are given from the second address register 27 and the main memory 12, respectively. At any rate, a combination of the avail and the request control circuits 21 and 22 and the first address register 26 serves to receive the following request during the block transfer regardless of the following address accompanying the following request.

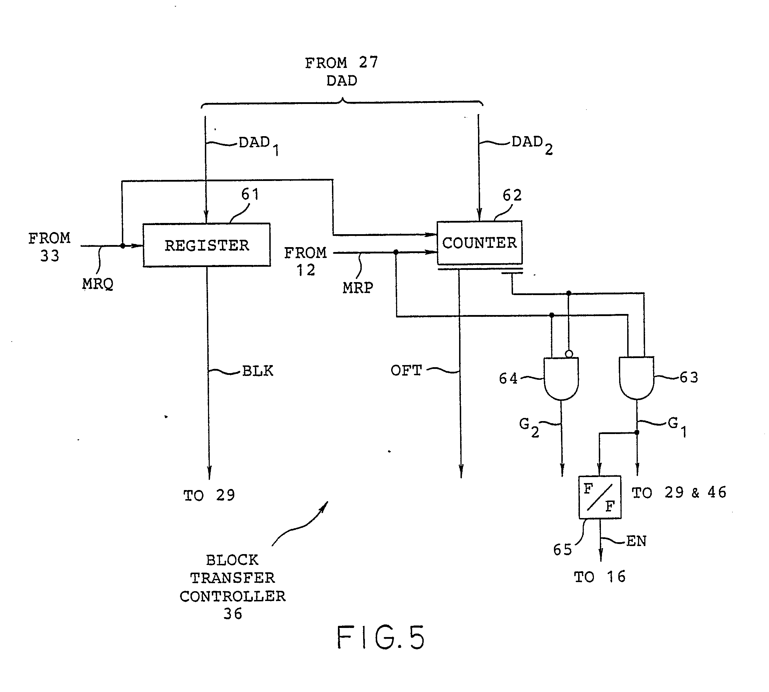

Referring to Fig. 5 in addition to Fig. 2, the block transfer controller 36 is supplied with the real address portion of the delayed address signal DAD, as described in conjunction with the address signal AD and is put into an active state during block transfer carried out when a data unit requested by the request signal RQ is absent from the data array 16. Such block transfer is assumed to be carried out about the previous request. During the block transfer, a data unit of eight bytes is assumed to be transferred as the memory reply data signal MRD from the main memory 12 eight times. The virtual address portion may be left out of consideration because the virtual address portion is not concerned with the following description.

The real address portion is divided into the higher significant fraction of eight bits and the lower significant fraction of three bits which are depicted at $DAD_1$ and $DAD_2$, respectively, as shown in Fig. 5. The higher and the lower significant fractions $DAD_1$ and $DAD_2$ are supplied to a register 61 and a counter 62 which become active in response to the memory request signal MRQ, respectively. The higher and the lower significant fractions are for specifying the block address and the offset address, respectively, as mentioned before.

The register 61 supplies the fourth address register 29 with the higher significant fraction as a block address signal BLK.

On the other hand, the counter 62 is successively given the memory reply signal MRP from the main memory 12 and counter up by one in response to each memory reply signal MRP. As a result, the count of the counter 62 cyclically varies between "111" and "000" in a binary fashion. Such a count successively specifies each offset address within the block specified by the block address. In this connection, each offset address is successively accessed on reception of each memory reply signal MRP to be produced as an offset address signal OFT. Thus, the count is delivered as an offset address signal OFT of three bits which alternatingly represents an even number or an odd number.

The least significant bit of the offset address signal OFT is supplied to a first AND gate 63 directly and to a second AND gate 64 through an inverter. The first and the second gates 63 and 64 are given the memory reply signal MRP.

Under the circumstances, the first AND gate 63 produces as a first gate signal $G_1$ a logic "1" level signal in timed relation to the memory reply signal MRP when the least significant bit takes the logic "1" level. This shows that the first AND gate 63 is opened when the count represents an odd number. The first gate signal $G_1$ is delivered to both the fourth address register 29 and the first data register 46 to put them into active states and is set into a flip-flop 65. When the flip-flop 65 is set, an enable signal EN is sent from the flip-flop 65 to the data array 16. As a result, the data array 16 is put into an enable state.

Likewise, the second AND gate 64 produces as a second gate signal $G_2$ the logic "1" level signal when the least significant bit of the offset address signal OFT takes the logic "0" level. The second gate signal $G_2$ is delivered to the lower part of the first data register 46 so as to render the lower part active.

In Fig. 2, the block address signal BLK and the offset address signal OFT are sent to the fourth address register 29 having an upper section of eight bits and a lower section of three bits. When the first gate signal $G_1$ is produced from the first AND gate 63 (Fig. 5) of the block transfer controller 36, the block and the offset address signals BLK and OFT are kept in the upper and the lower sections of the fourth address register 29 in response to the first gate signal $G_1$. In this event, the block and the offset address signals BLK and OFT are produced as an array address signal AA of eleven bits which is divisible into a least significant bit and the remaining ten higher significant bits.

On the other hand, the higher and the lower parts of the first data register 46 become active in response to the first and the second gate signals $G_1$ and $G_2$, respectively, and are loaded with the memory reply data unit signals MRD in synchronism with the first and the second gate signals $G_1$ and $G_2$, respectively.

The data array 16 is accessed by the ten higher significant bits of the array address signal AA. As a result, a pair of the data units is simultaneously stored from the first data register 46 into the data array 16 in timed relation to the first gate signal $G_1$. From this fact, it is understood that the data array 16 is put into an active state at every other one of the memory reply signals MRP to store the memory reply data unit signal pair and is kept in an idle state during the remaining memory reply signals MRP. Such active and idle states cyclically and alternatingly appear during the data transfer. Accordingly, it may be said that the active and the idle states define an active cycle and an idle cycle, respectively.

In the buffer memory circuit arrangement 10 illustrated in Fig. 2, a data unit is read out of the data array 16 as the reply data signal RD by the use of the idle cycle even during the block transfer carried out in response to the previous request signal. In addition, the reply data signal RD can be read out of the data array 16 in response to a following request signal immediately after write-in operation for the reply data signal RD. For this purpose, each address signal AD of the previous and the following request signals RQ is monitored by the restart controller 41 and the hit detector 42 in the manner to be described.

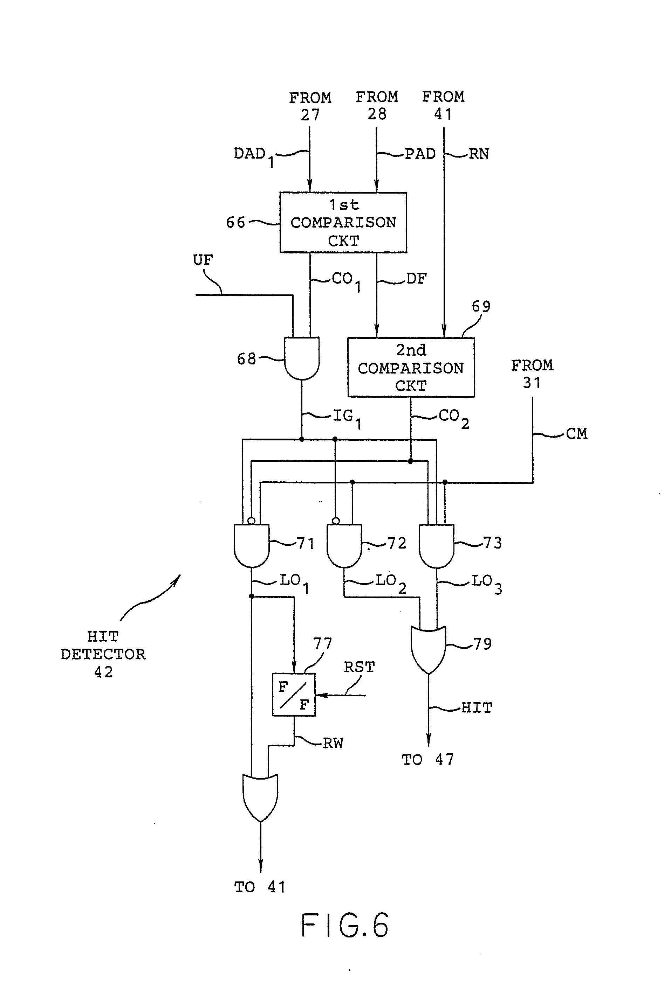

Referring to Fig. 6 anew and Fig. 2 again, the hit detector 42 comprises a first comparison circuit 66 connected to the second and the third address registers 27 and 28. It is presumed that the third address register 28 is loaded with a previous address signal PAD accompanying the previous request signal and that the second address register 27 is loaded with the delayed address signal DAD of eleven bits accompanying the following request signal. As mentioned before, the previous address signal PAD is composed of a previous block address signal of eight bits and a previous offset address signal of three bits. The delayed address signal DAD may be called a following address signal and is composed of the higher and the lower significant fractions which may be referred to as a following block address signal and a following offset signal, respectively. The previous and the following block address signals specify previous and following block addresses, respectively, and the previous and the following offset address signals specify previous and following offset addresses, respectively.

In the first comparison circuit 66, the previous and the following block address signals are compared with each other to produce a coincidence signal $CO_1$ on detection of coincidence between the previous and the following block address signals. Furthermore, the first comparison circuit 66 compares the previous offset address signal with the following offset address signal to produce an offset difference signal DF representative of an offset address difference between the previous and the following offset addresses.

The coincidence signal $CO_1$ is sent to an AND gate 68 supplied with the "under transfer" flag UF from the flip-flop 37. The AND gate 68 produces an internal gate signal $IG_1$ of the logic "1" level when the coincidence $CO_1$ appears in the presence of the "under transfer" flag UF.

The offset difference signal DF is delivered to a second comparison circuit 69 responsive to a reply count signal RN which is given from the restart controller 41 and which is representative of a reply count or number of the memory reply signal MRP. The second comparison circuit 69 compares the offset difference signal DF with the reply count signal to detect a count difference obtained by subtracting the offset difference from the reply count.

Inasmuch as the reply count indicated by the reply count signal RN is successively counted up each time when the memory reply data unit signal MRD is received by the restart controller 41, as will become clear, the reply count exceeds the offset difference in time. Such an excess of the reply count over the offset difference shows that the memory reply data signal MRD requested by the following request signal has been already stored in the data array 16.

Taking the above into account, the second comparison circuit 69 produces a local comparison result signal $CO_2$ of the logic "1" level when the reply count exceeds the offset difference by two.

First, second, and third local AND gates 71, 72, and 73 are coupled to the AND gate 68. Specifically, the first and the third local AND gates 71 and 73 are directly connected to the AND gate 68 while the second local AND gate 72 is connected through an inverter to the AND gate 68.

The first through third local AND gates 71 to 73 are supplied from the comparator 31 (Fig. 2) with the comparison result signal CM of the logic "1" level when a data block for the following request signal RQ is stored in the buffer memory or is under block transfer. In addition, the first and the third local AND gates 71 and 73 are connected to the second comparison circuit 69.

With this structure, the first local AND gate 71 is opened when the block transfer is under way in connection with the previous request signal and is not advanced yet to the following address specified by the following address signal kept in the second address register 27, although the comparison result signal CM takes the logic "1" level. Under the above-mentioned conditions, the first local AND gate 71 supplies a first local signal $LO_1$ of the logic "1" level to both a first local OR gate 76 and a restart wait flip-flop 77. The restart wait flip-flop 77 is put into a set state by the first local signal $LO_1$ and is put into a reset state by a restart signal RST which is sent from the restart controller 41 in a manner to be described later. Thus, the restart wait flip-flop 77 produces, until reception of the restart timing signal RST, a restart wait flag signal RW which is indicative of a restart wait state of the following request signal accompanied by the following address signal stored in the second address register 27. The restart wait flip-flop 77 receives the restart timing signal RST in response to the restart wait flag signal RW.

Anyway, the restart wait flag signal RW and the first local signal $LO_1$ are delivered through the OR gate 76 to the restart controller 41. This shows that the additional request is not received after the following request by the avail and the request control circuits 21 and 22 during production of the restart wait flag signal RW.

The second local AND gate 72 produces a second local signal $LO_2$ of the logic "1" level when no coincidence is detected between the previous and the following addresses PAD and DAD by the first comparison circuit 66 during the block transfer carried out in connection with the previous request signal as long as the comparison result signal CM takes the logic "1" level. From this fact, it is readily understood that the following request can be processed during production of the "under transfer" flag signal UF even when the following address is different from the previous address.

The third local AND gate 73 produces a third local signal $LO_3$ of the logic "1" level when all of the comparison result signal CM, the internal gate signal $IG_1$, and the local comparison result signal $CO_2$ take the logic "1" levels. In other words, the third local signal $LO_3$ appears when the following request signal can be processed in spite of the fact that the block transfer is being carried out about the previous request signal.

The second and the third local signals $LO_2$ and $LO_3$ are produced through an OR gate 79 as the hit signal HIT. The hit signal HIT is delivered to the second data register 47.

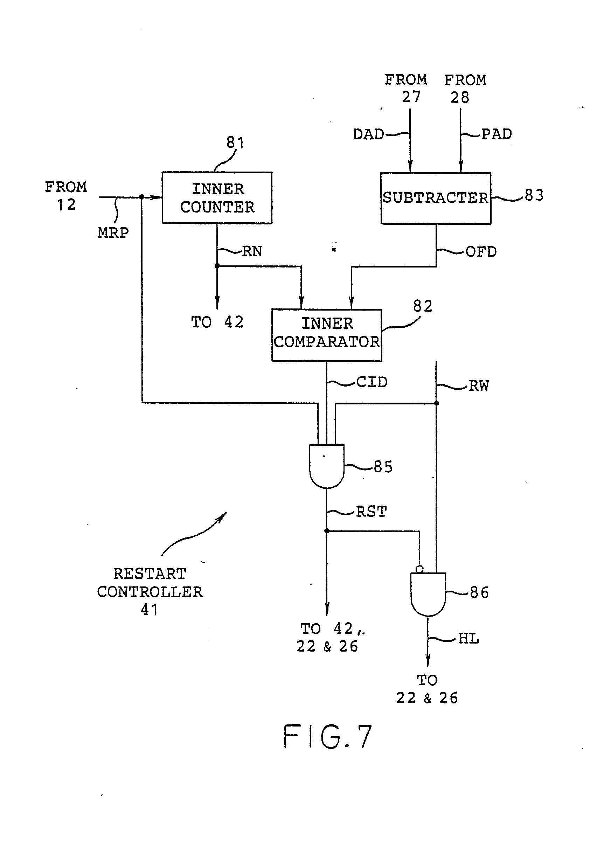

Referring to Fig. 7 together with Fig. 2, the restart controller 41 supplies the reply count signal RN and the restart timing signal RST to the hit detector 42 illustrated in Fig. 6. The restart timing signal RST is further sent to the first address register 26 and the request control circuit 22. In addition, the hold signal HL is delivered from the restart controller 41 to the avail control circuit 21 and the second address register 27.

In order to produce the reply count signal RN, the restart signal RST, and the hold signal HL, the illustrated restart controller 41 is connected to the second and the third address registers 27 and 28, the main memory 12, and the hit detector 42. More specifically, the memory reply signal MRP, the delayed address signal DAD (namely, the following address signal), the previous address signal PAD, and the restart wait flag signal RW are given from the main memory 12, the second address register 27, the third address register 28, and the hit detector 42 to the restart controller 41, respectively.

The memory reply signal MRP is sent to an inner counter 81 which is initially kept at "0." During the block transfer, the memory reply signal MRP is successively counted by the internal counter 81 one by one. The count of the memory reply signal MRP is sent to the hit detector 42 as the reply count signal RN. The reply count signal RN is also sent to an inner comparator 82 which is connected to a subtractor 83 responsive to the following and the previous address signals DAD and PAD.

An offset address difference between the following and the previous address signals DAD and PAD is calculated by the subtractor 83 to be sent to the inner comparator 82 as an offset address difference signal OFD.

When the reply count of the reply count signal RN is coincident with the offset address difference of the offset address difference signal OFD, the inner comparator 82 sends a coincidence signal CID to an AND gate 85 which is supplied with the memory reply signal RMP and the restart wait flag signal RW. Herein, it may be considered that the buffer memory may be allocated to the following request signal on production of the coincidence signal CID in addition to the reply wait flag signal RW.

Taking the above into consideration, the restart timing signal RST of the logic "1" level appears through the AND gate 85 in timed relation to the memory reply signal MRP when the coincidence signal CID is produced together with the restart wait flag signal RW. The restart timing signal RST is delivered to the hit detector 42 to be processed in the above-mentioned manner.

The restart timing signal RST is inverted and sent to an AND gate 86 responsive to the reply wait flag signal RW. From the AND gate 86, the hold signal HL is produced in the presence of the reply wait flag signal RW when no restart signal is given from the AND gate 85.

The hold signal HL is fed to the avail control circuit 21 (Fig. 3) and the first address register 26.

In Fig. 2, the second data register 47 is given the first reply signal FRS, the hit signal HIT, and the least significant bit of the address signal kept in the fourth address register 29. As a result, a pair of readout data units is selectively produced as the buffer reply data signal RD from the second data register 47 in response to the least significant bit.

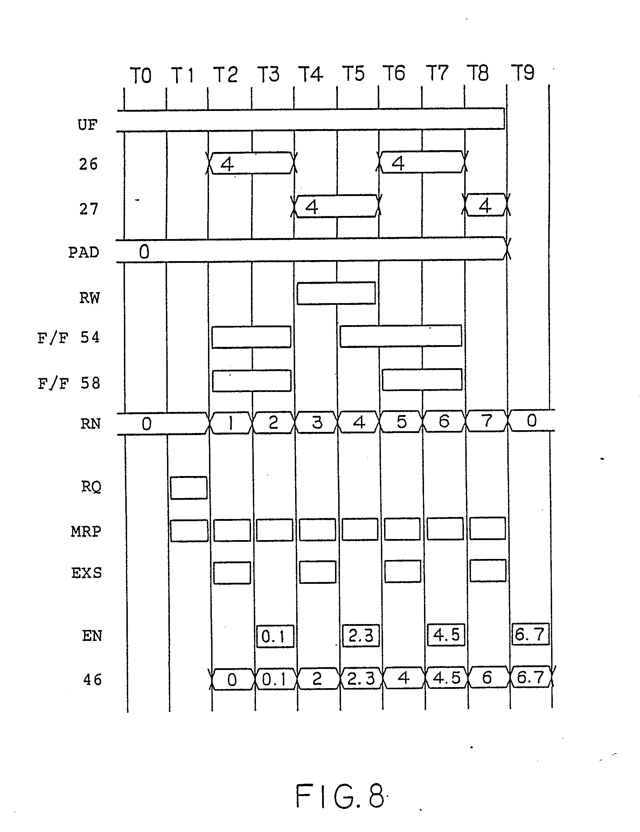

Referring to Fig. 8 along with Fig. 2, description will be made as regards operation of the buffer memory circuit arrangement 10 illustrated in Figs. 2 through 7. In Fig. 8, the operation is successively carried out along a time scale which is divided into zeroth through ninth intervals depicted at $T_0$ through $T_9$, respectively. A first one of the requests is assumed to be given as a first or previous request signal RQ and accompanied by a first or previous address signal PAD. In the example being illustrated, let the previous address signal PAD indicate a zeroth address of the main memory 12 that is not stored in the buffer memory and that is specified by a zeroth block address signal and a zeroth offset address signal. In this connection, the block transfer is carried out from the first interval $T_1$ to the eighth interval $T_8$ so as to fetch zeroth through seventh ones of the memory reply data unit signals MRD from the main memory 12 together with zeroth through seventh ones of the memory reply signals MRP, respectively. In this event, the previous address signal PAD is kept in the third address register 28 (Fig. 2) with the "under transfer" flag signal UF kept in the flip-flop 37 (Fig. 2). Therefore, the "under transfer" flag UF and the previous address signal PAD appear from the zeroth interval $T_0$, as shown at UF and PAD in Fig. 8, respectively.

Under the circumstances, the counter 62 (Fig. 5) of the block transfer controller 36 is kept at an initial value of "0" and is counted up by one each time when the memory reply signal MRP is received by the counter 62. This applies to the inner counter 81 (Fig. 7) of the restart controller 41.

In Fig. 8, the zeroth or leading memory reply signal MRP is received within the first interval $T_1$. Accordingly, each of the counter 62 and the inner counter 81 takes "1" through "7" in the second through eighth intervals $T_2$ to $T_8$, respectively, and is turned back to "0" in the ninth interval $T_9$, as shown at RN in Fig. 8.

In the block transfer controller 36 illustrated in Fig. 5, the flip-flop 65 is put into the set state in timed relation to each memory reply signal MRP when the count of the counter 62 is an odd number, as mentioned before. Therefore, the flip-flop 65 is set into the logic "1" state during the third, fifth, seventh, and ninth intervals $T_3$, $T_5$, $T_7$, and $T_9$ and sends the enable signal EN to the data array 16.

The first data register 46 is divided into the lower and the upper parts, as mentioned before, and is loaded with each of the memory reply data unit signals MRD in accordance with the first and the second gate signals $G_1$ and $G_2$ sent from the first and the second AND gates 63 and 64 (Fig. 5). Specifically, the memory reply data unit signal MRD is held in the lower part of the first data register 46 in response to the second gate signal $G_2$ while the memory reply data unit signal MRD is held in the upper part in response to the first gate signal $G_1$.

If the block transfer is carried out at every memory reply data signal of eight bytes and begins at a boundary of sixteen bytes, each even numbered memory reply data signal is kept in the lower part of the first data register 46 while each odd numbered memory reply data signal is kept in the upper part.

At any rate, a pair of the memory reply data signals kept in the first data register 46 is written into the data array 16 within each of the third, fifth, seventh, and ninth intervals $T_3$, $T_5$, $T_7$, and $T_9$.

More particularly, the zeroth and the first memory reply data unit signals are written into the data array 16 during the third interval $T_3$. Likewise, the second and the third memory reply data unit signals, the fourth and the fifth memory reply data unit signals, and the sixth and the seventh memory reply data unit signals are written into the data array 16 during the fifth, the seventh, and the ninth intervals $T_5$, $T_7$, and $T_9$, respectively.

In other words, the data array 16 is exclusively used to write the memory reply data signals at every other one of the intervals and can be used for any other request except for the first request during the remaining intervals which may be called idle intervals of the data array 16.

A zeroth one of the memory reply signals MRP is sent from the main memory 12 to buffer memory circuit arrangement 10 during the first interval $T_1$, as depicted at MRP in Fig. 8. The zeroth memory reply signal MRP is delivered to the counter 62 (Fig. 5) of the block transfer controller 36 and the inner counter 81 (Fig. 7) of the restart controller 41 during the first interval $T_1$. In this connection, both the counter 62 and the inner counter 81 are kept at "0" during the first interval $T_1$, as specified by the reply count signal RN in Fig. 8.

In Fig. 8, a second one of the requests is given from the request source 11 during the first interval $T_1$ as the following or second request signal accompanying the following or second address signal. It is surmised that the following request signal is a readout request signal and that the following address signal specifies a fourth address "4" of the main memory 12 that belongs to the same block address as the zeroth address indicated by the previous address signal. The following request signal is sent to the avail control circuit 21 as the request signal RQ during the first interval $T_1$. As a result, the accepted request signal ARQ is sent from the avail control circuit 21 (Fig. 3) to the first address register 26. Accordingly, the following address signal is kept into the first address register 26 at the end of the first interval $T_1$.

Simultaneously, the reception flip-flop 58 (Fig. 4) of the reception control circuit 22 is put into the set state. Likewise, the request rejection flip-flop 54 (Fig. 3) of the avail control circuit 21 is put into the set state. This shows that neither the avail signal AV nor the accepted request signal ARQ is produced from the avail control circuit 21. Thus, reception of another or additional request is rejected by the avail control circuit 21 after reception of the following request.

During the second interval $T_2$, the first address register 26 is loaded with the following address signal of "4" while the reception flip-flop 58 and the request rejection flip-flop 54 are put into the set states, as shown at F/F 58 and F/F 54 in Fig. 8, respectively. On the other hand, a first one of the memory reply signals MRP is sent from the main memory 12 together with the execution suppress signal EXS. The suppress execution signal EXS is delivered to the reception flip-flop 58 of the request control circuit 22 to reject reception of another request signal succeeding the following or second request signal. In this event, the reception flip-flop 58 and the first address register 26 are kept in the hold states. Even when the first address register 26 becomes the hold state, the request rejection flip-flop 54 of the avail control circuit 21 is previously kept in the set state in response to the following request signal. Therefore, no avail signal AV is sent back to the request source 11.

The execution suppress signal EXS is helpful to avoid collision of write-in operation into the data array 16 and reception of a request signal RQ sent from the request source 11. In fact, the leading or zeroth reply data signal depicted at "0" is kept in the first data register 46 in the presence of the execution suppress signal EXS, as shown at 46 in Fig. 8. Responsive to the zeroth reply data signal, the counter 62 (Fig. 5) and the inner counter 81 (Fig. 7) are counted up to "1" at the end of the first interval $T_1$.

Within the second interval $T_2$, a first one of the memory reply data unit signals MRD is sent together with the first memory reply signal from the main memory 12 to the first data register 46 after the zeroth memory reply data unit signal. In this connection, the counter 62 and the inner counter 81 are counted up to "2" in response to the memory reply signal MRP at the end of the second interval $T_2$.

During the third interval $T_3$, the execution suppress signal EXS becomes zero and is therefore interrupted. Interruption of the execution suppress signal EXS puts the reception flip-flop 58 (Fig. 4) of the request control circuit 22 into the reset state and therefore resets the request rejection flip-flop 54 (Fig. 3) of the avail control circuit 21.

In addition, the following request is processed during the third interval $T_3$ to access the buffer memory. More specifically, the address array 17 is accessed by the following address signal AD which is kept in the first address register 26. The block address for the following request signal has been already registered in the address array 17. Therefore, the comparator 31 delivers the comparison result signal CM of the logic "1" level to the memory access controller 33 (Fig. 2) and the hit detector 42 (Fig. 6).

On the other hand, the block transfer controller 36 (Fig. 5) is operable to control the data array 16, the first data register 46, and the fourth address register 29 during the third interval $T_3$. Specifically, the counter 62 (Fig. 5) of the block transfer controller 62 indicates the count of an odd number "1" at the end of the second interval $T_2$. Therefore, the first gate signal $G_1$ is supplied from the AND gate 63 (Fig. 5) to the upper part of the first data register 46. Thus, the zeroth and the first memory reply data signals depicted at 0 and 1 are kept in the first data register 46. Furthermore, the enable signal EN is sent to the data array 16 from the flip-flop 65. Consequently, the zeroth and the first memory reply data signals are simultaneously stored in the data array 16.

From this fact, it is seen that the second or following request is received by the request control circuit 22 while a pair of the memory reply data signals is stored in the data array 16 in the absence of the execution suppress signal EXS.

During the fourth interval $T_4$, the hit detector 28 is supplied with the first or previous address signal PAD kept in the third address register 28 and the second or following address signal DAD kept in the second address register 27. As mentioned in conjunction with Fig. 6, the first comparison circuit 66 compares the first address signal PAD with the second address signal DAD. In the example being illustrated, both the first and the second address signals PAD and DAD have a common block address. Furthermore, the first and the second address signals PAD and DAD have the first and the second offset address signals which specify "0" and "4," respectively.

During the fourth interval $T_4$, the inner counter 81 (Fig. 7) of the restart controller 41 is counted to three and produces the reply count signal RN indicative of "3."

Under the circumstances, the first comparison circuit 66 (Fig. 6) of the hit detector 42 produces the coincidence signal $CO_1$ and the offset address difference signal DF representative of the offset address difference equal to four. Responsive to the coincidence signal $CO_1$, the AND gate 68 produces the internal gate signal $IG_1$ of the logic "1" level because of reception of the "under transfer" flag signal UF. The offset address difference signal DF is compared with the reply count signal RN by the second comparison circuit 69 in the above-mentioned manner. Consequently, the second comparison circuit 69 supplies the first and the third local AND gates 71 and 73 with the logic "0" level. Under the circumstances, the first local signal $LO_1$ is supplied from the first local AND gate 71 to the restart wait flip-flop 77 and is sent as the restart wait flag signal RW to the AND gate 86 (Fig. 7) of the restart controller 41. The resultant AND gate 86 delivers the hold signal HL to the avail control circuit 22 and second address register 27. Thus, the second address register 27 is kept in the hold state while the request rejection flip-flop 54 of the avail control circuit 21 is put into the set state.

During the fourth interval $T_4$, the execution suppress signal EXS is sent from the main memory 12 to the request control circuit 22. A second one of the memory reply data signals MRD is set into the lower part of the first data register 46 within the fourth interval $T_4$.

During the fifth interval $T_5$, the inner counter 81 (Fig. 7) of the restart controller 41 counts the memory reply signals MRP to four. Inasmuch as the offset address difference between the first and the second address signals PAD and DAD is equal to four in the example being illustrated, the inner comparator 82 produces the coincidence signal CID of the logic "1" level during the fifth interval $T_5$. The AND gate 85 of the restart controller 41 produces, as the restart timing signal RST, the logic "1" level because the memory reply signal MRP and the reply wait flag signal RW take the logic "1" levels. The restart timing signal RST is delivered to the restart wait flip-flop 77 of the hit detector 42 to put the same into the reset state. In addition, the restart timing signal RST is also delivered to the request control circuit 22 and the first address register 26 with the hold signal HL stopped. When the hold signal HL is stopped, the second address register 27 releases the hold state. Under the circumstances, the following address signal DAD kept in the second address register 27 can be transferred to the first address register 26.

Responsive to the restart timing signal RST, the reception flip-flop 58 (Fig. 4) of the reception control circuit 22 is put into the set state. Likewise, the reply wait flip-flop 77 (Fig. 6) of the hit detection circuit 42 is reset by the restart timing signal RST. As a result, the reply wait flag signal RW is interrupted.

During the fifth interval $T_5$, the upper part of the first data register 46 is loaded with a third one of the memory reply data signals MRD that is stored in the data array 16 together with the second memory reply data signal in response to the enable signal EN produced by the flip-flop 65 (Fig. 5) of the block transfer controller 36.

During the sixth interval $T_6$, the following address signal is moved from the second address register 27 to the first address register 26 while the execution suppress signal EXS is sent from the main memory 12 to the request control circuit 22. Under the circumstances, processing of the following request is stopped during the sixth interval $T_6$ due to the presence of the execution suppress signal EXS, like in the second interval $T_2$. Instead, the following request is produced during the seventh interval $T_7$, as is the case with the third interval $T_3$.

During the eighth interval $T_8$, the inner counter 81 (Fig. 7) of the restart controller 41 counts the memory reply signals MRP to seven. Therefore, the hit detector 42 (Fig. 6) is supplied with the reply count signal RN representative of the reply count of "7." The reply count of "7" is greater than a sum of the offset address difference of "4" calculated by the first comparison circuit 66 (Fig. 6) and the predetermined number of "2" determined for the second comparison circuit 69. This shows that the second comparison circuit 69 produces the local comparison result signal $CO_2$ of the logic "1" level.

As a result, the third local AND gate 73 produces the third local signal $LO_3$ of the logic "1" level through the OR gate 79 as the hit signal HIT of the logic "1" level. The hit signal HIT is sent to the second data register 47 as a readout indication signal.

Thus, the second data register 47 is loaded with contents stored in the fourth address of the data array 16. Thereafter, the readout contents are transferred as the reply data signal RD to the request source 11.

With this structure, the contents written into the fourth address within the seventh interval $T_7$ can be quickly read out of the fourth address during the eighth interval $T_8$ following the seventh interval $T_7$. While this invention has thus far been described in conjunction with a preferred embodiment thereof, it will readily be possible for those skilled in the art to put this invention into practice in various other manners. For example, the address signal AD may have a real address signal alone without any virtual address signal.

## Claims

1. A buffer memory circuit arrangement for use in combination with a request source and a main memory to receive a succession of requests from said request source and to fetch a block from said main memory in response to each of said requests, one request at a time, by carrying out block transfer when said block is absent in said buffer memory circuit arrangement for said one request, said block being composed of a sequence of data units to which consecutive unit addresses are assigned, respectively, said buffer memory circuit arrangement comprising a buffer memory for storing said data units of the block within write intervals defined during said block transfer, respectively, said one request being followed by a following request of said succession of requests ,said following request being accompanied by a following address of said unit addresses, respectively, wherein the buffer memory circuit arrangement comprises:

receiving means coupled to said request source for receiving said following request regardless of said following address during said block transfer; and

processing means coupled to said receiving means for processing the following request received by said receiving means unless said buffer memory is during said write intervals, said processing means being otherwise for processing said following request after delay of said following request.

2. A buffer memory circuit arrangement as claimed in Claim 1, said one request being accompanied by a previous address which has a previous block address for specifying said block, wherein said receiving means receives said following request even when said following address has a following block address different from said previous block address.

3. A buffer memory circuit arrangement as claimed in Claim 1 or 2,wherein said receiving means receives an additional request succeeding said following request even before completion of said block transfer when said following request is received and processed during said block transfer.

4. A buffer memory circuit arrangement as claimed in Claim 3, said additional request being accompanied by an additional address, wherein said receiving means comprises:

avail signal supplying means coupled to said request source for supplying an avail signal to said request source during said block transfer even after said following request is received and processed;

means coupled to said request source for producing an accepted request signal in response to said additional request as long as said avail signal is present; and

means responsive to said accepted request signal for receiving said additional address.

5. A buffer memory circuit arrangement as claimed in Claim 3, said previous address further having a previous data unit address for specifying a specific one of said data units in said data block, wherein said processing means comprises:

register means for holding said previous address and said following address;

monitoring means coupled to said holding means and said main memory for monitoring whether or not said specific one of the data units is stored into said buffer memory by said block transfer; and

signal producing means coupled to said monitoring means for producing a restart signal when said specific one of the data units is stored into said buffer memory and, otherwise, a hold signal;

said receiving means comprising:

controllable means responsive to a controlled request and said additional request and coupled to said signal production means for holding said hold signal by taking a set state to reject reception of said additional request during said block transfer; and

means responsive to said restart signal for supplying said controllable means with said controlled request to release said set state and to thereby receive said additional request.

6. A buffer memory circuit arrangement as claimed in Claim 3, said previous address further having a previous data unit address for specifying a specific one of said data units in said data block, said following address further having a following data unit address for specifying a following one of said data units, said data units being transferred during said block transfer from said main memory to said buffer memory together with reply signals, respectively, wherein said processing means comprises:

register means for holding said previous address and said following address;

counting means responsive to said reply signals for counting the reply signals to produce a reply count signal representative of the number of the reply signals received;

detecting means responsive to said previous and said following addresses held in said register means for detecting whether or not the previous block address is coincident with the following block address to produce a coincidence signal when both the previous and the following block addresses are common to each other, said detecting means further detecting a difference between said previous data unit address and said following data unit address to produce a difference signal representative of said difference; and

means responsive to said coincidence signal and said difference signal for producing a processing timing signal which defines a timing of processing said following request.

Our Ref: X 292 EP
EP 88 10 1698.4
NEC Corporation

FIG. 1

FIG.2

FROM FROM FROM
37    41   11

UF⌐  HL⌐    ⌐RQ

⌐53         O₁

52      A₁

CRQ

FROM 22 →  F/F

54

55          51

AV⌐         ⌐ARQ

TO          TO
11          22 & 26

AVAIL
CONTROL
CKT
21

# FIG.3

FROM FROM
21    41

ARQ⌐    ⌐RST

⌐57

EXS

FROM 12   F/F  58

59

⌐CRQ

TO
21 & 32

REQUEST
CONTROL
CKT
22

# FIG.4

FROM 27
DAD

DAD$_1$

DAD$_2$

61

62

FROM
33

REGISTER

FROM
12

COUNTER

MRQ

MRP

BLK

OFT

64

63

G$_2$

G$_1$

TO 29

F / F

TO 29 & 46

65

EN

BLOCK
TRANSFER
CONTROLLER
36

TO 16

FIG.5

FIG.6

FIG.7

FIG.8